# EUROPEAN PATENT SPECIFICATION

(11) **EP 0 931 376 B1**
(45) Date of publication and mention of the grant of the patent: **03.12.2008**
(21) Application number: 97942991.7
(22) Date of filing: 07.10.1997
(51) Int. Cl.: H02K 9/04

(54) **ELECTRIC MACHINE CONSTRUCTION AND A METHOD FOR COOLING AN ELECTRIC MACHINE**
ELEKTRISCHE MASCHINE UND VERFAHREN ZU DEREN KÜHLUNG
MACHINE ELECTRIQUE ET PROCEDE POUR SON REFROIDISSEMENT

(30) Priority: 08.10.1996 FI 960512 U
(43) Date of publication of application: 28.07.1999
(73) Proprietor: The Switch Electrical Machines Oy, 53850 Lappeenranta (FI)
(72) Inventor: PYRHÖNEN, Juha, FIN-53850 Lappeenranta (FI)
(74) Representative: Kärkkäinen, Veli-Matti
(86) International application number: PCT/FI1997/000605
(87) International publication number: WO 1998/015999

(56) References cited:
- EP-A- 0 361 925
- US-A- 5 306 972
- PATENT ABSTRACTS OF JAPAN, Vol. 13, No. 53; JP,A,63 245 240 (BABA YOSHINAO), 12 October 1988.

## Description

The present invention relates to a construction according to the preamble of claim 1 to be used, for example, in connection with electric motors. The invention relates further to a method according to the preamble of claim 8 to be used in connection with, for example, electric motors.

It is prior known to arrange cooling of eg. an electric machine, especially the input and/or output (blow in/out) of the cooling air, from one end thereof, usually by means of a fan arranged to said one end. The air is blown by means of the fan or blower such that the air is forced to enter into the machine housing. The air may even be pressurized over the atmospheric pressure so as to ensure the flow thereof into the machine housing and subsequently out of the machine housing.

A motor-actuator combination, such as a motor + a pump or a compressor, is usually arranged such that the motor and the actuator are mounted as separate units either to a same bed or even to separate beds. In the known structure the power output of the motor is usually arranged to the other end thereof only, ie. it has not been possible to provide more than one single actuator device. In case of two output shafts, the additional second shaft is usually only adapted to extend through the per se conventional other end including the fan.

The presented solutions, however, do have several disadvantages. For instance, the blower based supplying of the air has not in all instances been enough to provide a sufficient cooling of the entire construction. The conventional cooling arrangements, when combined with the solutions enabling power output from both ends of the electric motor, have presented some overheating problems, as the original design is not intented for any kind of shafts extending through the blower means at the other end. In addition, the provision of a closed or open symmetrical cooling, and thus a uniform cooling of the machine, has proven to be difficult. The cooling by means of a blower has itself increased the temperature of the cooling medium, ie. the air, since the temperature of the air increases as the pressure increases. No satisfying solution for a closed circulation of the medium has been suggested. Furthermore, the mutual adjustment of the motor and the actuator at the assembly site has proven to be a labour consuming and difficult operation. In addition, small relative movements may occur between the actuator and the motor disposed on separate beds during the use thereof. The mutual positioning thereof is not always assembled correctly, or it changes during the use. The incorrect mutual positioning and/or the unwanted relative movements usually lead in general into leaks and/or additional wear of other parts, such as bearings.

JP 6324 5240 discloses an electric machine construction comprising the features of the preamble of claim 1.

The present invention seeks to overcome the disadvantages of the prior art and to provide a new type of construction and a method for the electric machines. The inventions seeks to provide a cooling arrangement and a method which itself does not give any rise to the temperature of the machine construction. The inventions seeks also to provide an electric machine construction and a method which enables an uniform cooling arranged in a symmetrical manner. In addition, the invention seeks for a provision of an electric machine construction which provides a possibility for an improved attachment solution of an actuator to the both ends of the machine. The invention seeks also for a provision of a solution which enables an integrated motor-actuator assembly. The invention seeks further to obtain a machine construction having such end portions thereof which form also the means for attachment of the machine. A still further object is a solution which enables a closed circulation of the cooling medium.

The invention is based on the basic idea that by providing a machine construction and a method in which the cooling medium or fluid is arranged to be conducted inside a stator space in a vacuum or suction aided manner through at least one opening in the shell thereof, a design and a method is provided which implements the objects set for the invention. The machine construction is preferably such that the circulation of the cooling medium or fluid occurs symmetrically, such as by providing the supply of the medium through the shell of the stator space and the removal thereof symmetrically at the both ends of the construction or closely adjacent to the ends. The construction according to a preferred form of the invention allows an arrangement in which the end portions of the machine receive the attaching members of the actuator and also, if desired, an arrangement in which the end portions function as means for attaching the entire assembly to the bed.

More precisely, the construction according to the present invention is characterized by what is disclosed in appended claims 1...7 and especially by claim 1. The method according to the present invention is characterized by what is disclosed in appended claims 8...12 and especially by claim 8.

Several advantages are obtained by means of the present invention. The cooling of the machine which is constructed according to the principles of the present invention occurs evenly and the cooling is enhanced when compared to the prior art solutions. Mounting of a motor and actuator assembly is eased and quickened essentially, while the amount of required separate mounting stands is decreased and said assembly becomes more simple from the general construction thereof. The assembly according to the invention is economical to manufacture, for instance due to the smaller amount of various parts. In addition, the reliability of the motor and actuator assembly is improved, for instance due to the improved accuracy in mounting and lowered risk for relative movements between the various components of the assembly.

In the following the present invention and the other objects and advantages thereof will be described in an exemplifying manner with reference to the annexed drawings, in which similar reference characters throughout the various figures refer to similar features. It should be understood that the following exemplifying description is not meant to restrict the invention to the specific forms presented in this connection but rather the present invention is meant to cover all modifications, similarities and alternatives which are included in the spirit and scope of the present invention, as defined by the appended claims.
Figures 1a and 1b disclose a motor according to the present invention from two directions.
Figure 2 discloses a sectional view of the motor structure.
Figures 3a, 3b and 3c disclose one assembly from three different directions.
Figures 4a, 4b and 4c disclose, partially in section, some additional embodiments.

In some of the figures a part of such contours, which are not visible in the reality but are disposed beyond the surfaces between them and the viewer, are presented by dashed lines. In addition, in some figures the dashed lines are presented to indicate the center lines of the apparatus.

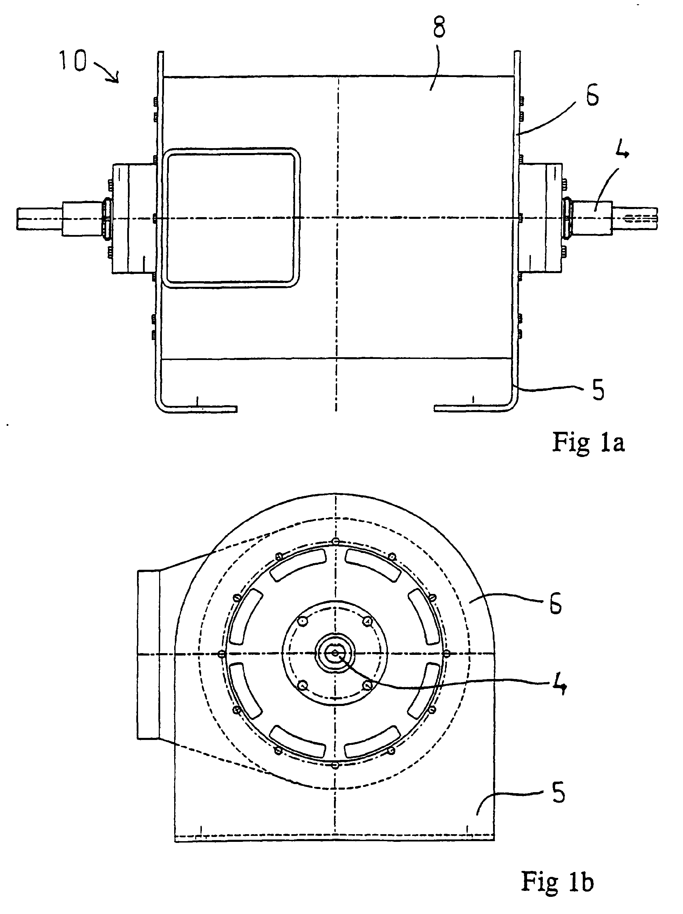

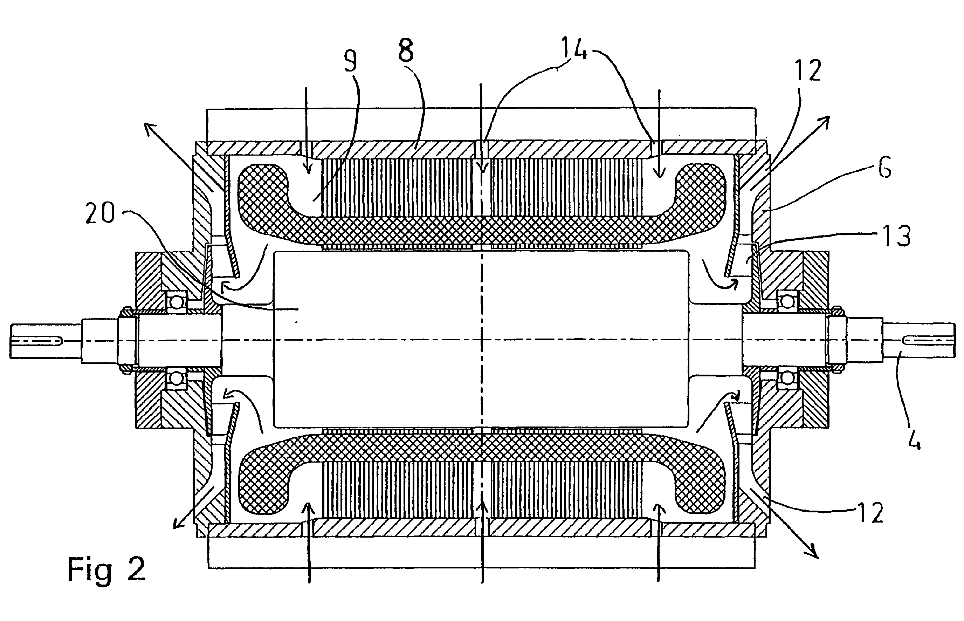

Figures 1a and 1b disclose a motor construction 10 according to the invention from the side and respectively form the end thereof such that a possible actuator attached therein has been omitted. The motor construction 10 comprises an essentially cylindrical body portion 8 or a body shell. The rotor and stator members of the motor are positioned within said shell in a manner per se known by the skilled person (see figure 2).

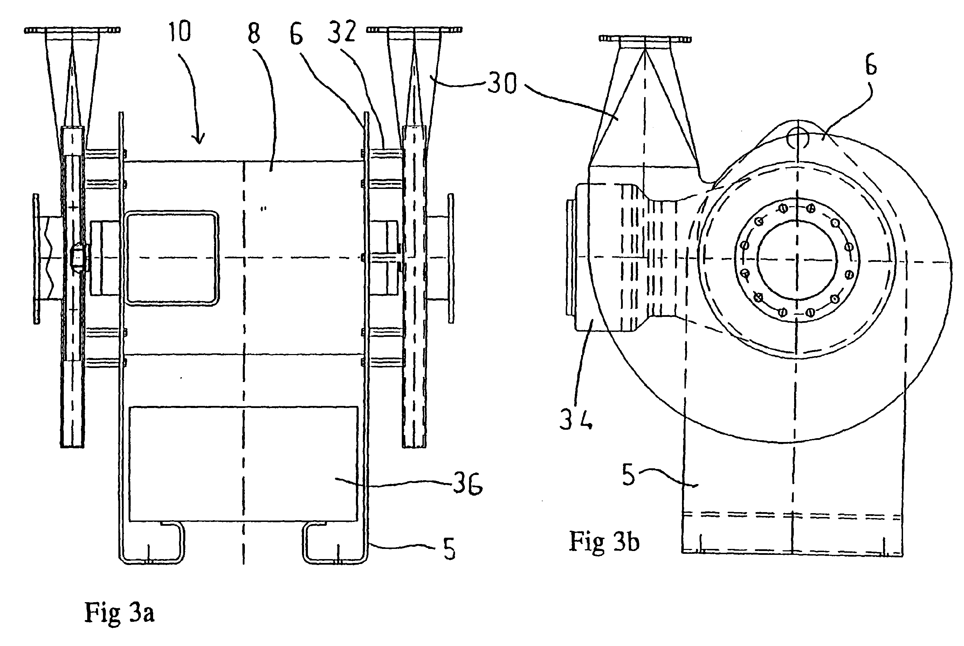

An end plate 6 is attached to both ends of the body portion 8. The end plate 6 extends at least in one side of the motor over the width of the body portion 8 such that it forms a mounting support 5, as is shown by figs. 1a and 1b or 3a and 3b. It can be noted that the housing structure of the motor 10 is formed from only three per se simple pieces, from which the end plates 6 are identical with each other.

Power output shafts 4 are provided at both ends of the motor. This is enabled eg. by the constructional arrangement disclosed by figure 2. According to that the cooling air or similar fluid is drawn by means of a suction through the shell 8 of the motor via openings 14 in a manner designated by the arrows into the stator space 9, wherein the suction is generated by the rotation of the rotor 20. The air is thereafter circulated symmetrically inside the stator space, as is designated by the additional arrows. To generate the suction, the rotor shaft 20 may be provided with fans 13. In figure 2 the air which flows symmetrically within the motor, as is designated by the arrows, leaves the stator space 9 through removal openings 12 provided in connection with the ends 6. Thus the solution provides a symmetrical cooling for the entire machine. The arrangement is such that the air is not blown into machine, and the air is thus not pressurized as it enters the machine, but that the air is instead drawn into the machine by means of the suction generated by the rotation of the rotor and the fans 13. As a matter fact, some throttling occurs in the suction openings 14, said throttling cooling the circulating air. This is an opposite effect to the solutions based on blowing, in which the air tends to heat as it is pressurized, and in which the amount of heating may be essentially high. By means of an appropriate shaping of the grooves of the rotor 20 it is even possible to further effectuate the flow of the cooling air.

Figures 3a to 3c disclose one assembly according to the present invention. An actuator is mounted to both ends of the motor 10. In the figures the actuator is shown to be a compressor 30, but it can be any device requiring rotating input power, such as a pump, a gear and so on.

The compressor 30 is attached directly to the end plate 6 of the motor 10 by means of attachment members 32, said end plate operating also as mounting support 5 of the motor and actuator assembly. The attachment members 32 are shown to be formed of sleeves or pipe spacers through which conventional screws are extending, said screws being tightened by nuts. Other type of mounting can also be used, such as mounting frame or legs etc. means adapted for attaching separate members to each other and per se known by the skilled person. The essential in here is that the actuator is attached directly to the end plate 6, which also functions at the same time as a mounting member 5 of the integrated assembly.

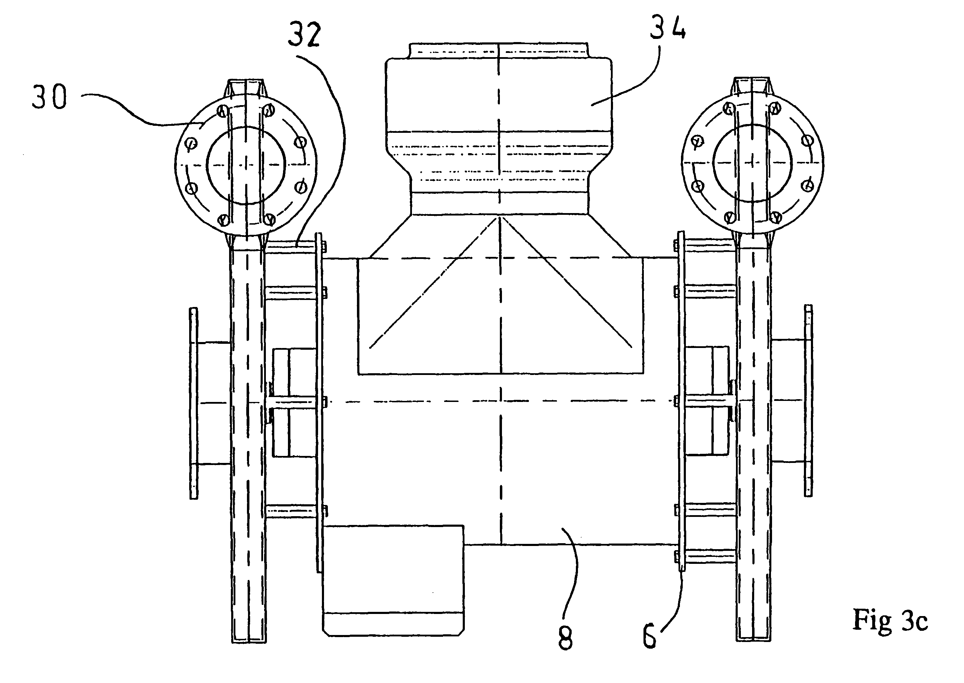

Figures 3b and 3c disclose also a shell conduit 34 provided on the motor shell 8, through which the cooling air is arranged to be conducted into the motor. The cooling air conduit may also include a suitable fan so as to enhance the flow of air. The air is vented through the ends 6 of the motor, but in this case in axial direction. An oil tank 36 of a circulation lubrication system has also been disclosed to be positioned between the legs 5. However, this is only an example of the utilization of this space, and it is possible to place any desired auxiliary device into this location.

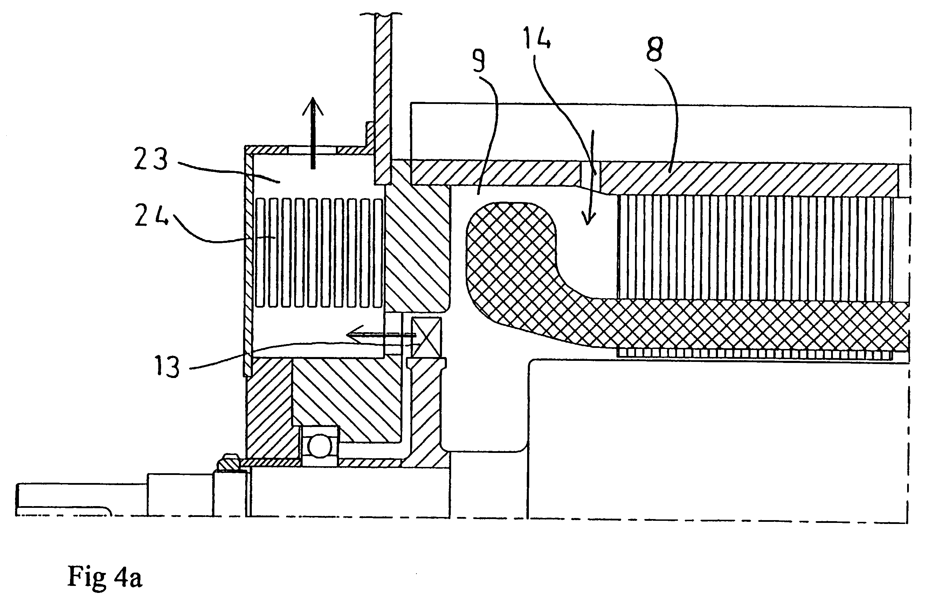

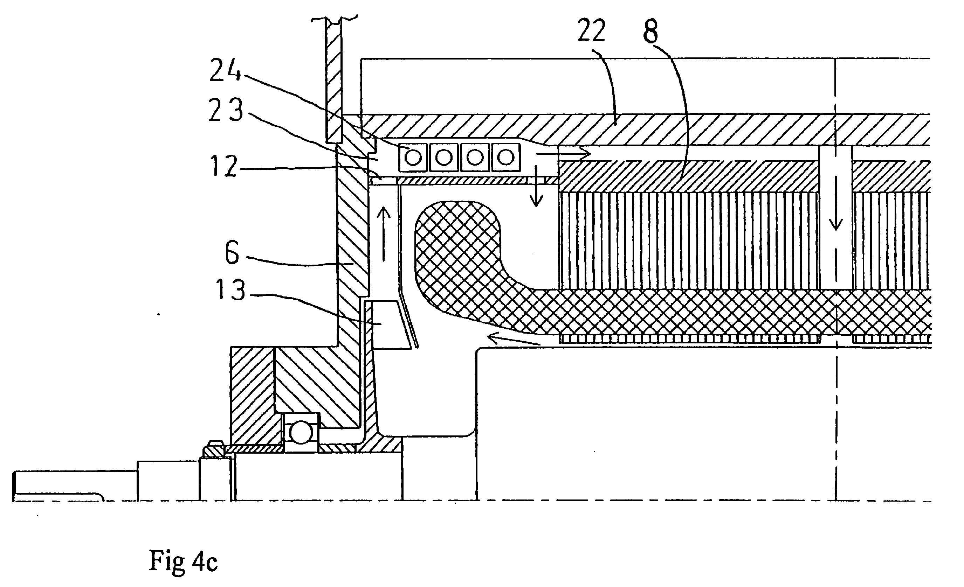

Figure 4a discloses as a sectioned view a part of a motor, and more precisely, a portion of the other end thereof, showing one solution for implementing the cooling circulation. The air which is vented axially through the end is conducted to a heat exchanger means 24 within a space 23, and subsequently out from the space 23, as is indicated by the arrows. The skilled person is familiar with the heat exchanger means, such as the plate heat exchanger 24 of figure 4a or tube heat exchanger of figure 4c, and they are thus not explained in more detail herein than by mentioning that the operation thereof may be based eg. on liquid or gas cooling.

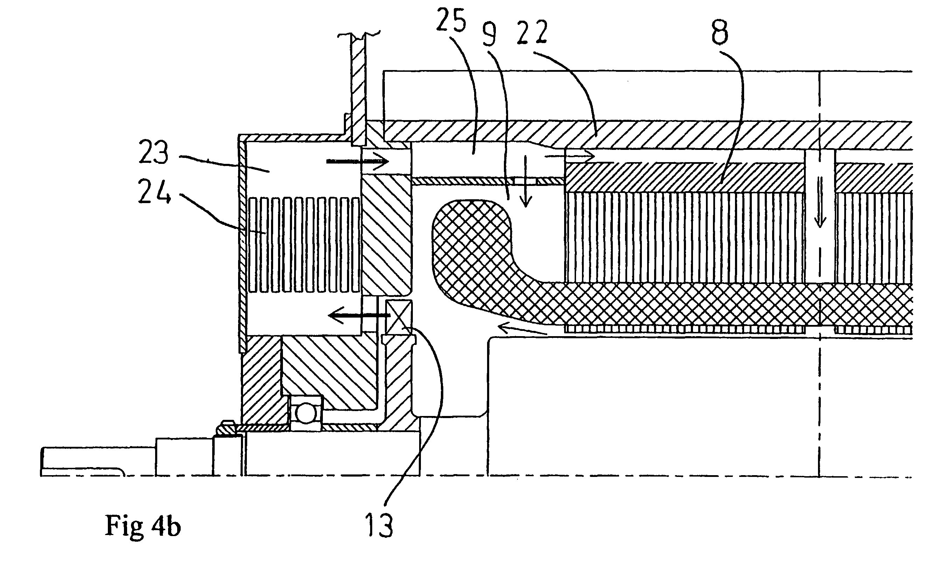

In figures 4b and 4c a closed circulation has been provided such that the shell 8 of the stator space forms an intermediate body disposed inside an outer housing 22 of the motor. In figure 4b the cooling medium circulates in a manner indicated by arrows from the space between the outer housing 22 and the shell 8 to the stator space 9, wherefrom it is further transferred axially to the cooling space 23 by means of the fan means 13. The heat exchanger means, such as the plate heat exchanger of figure 4a or the tube heat exchanger of figure 4c, are positioned in said cooling space. From the cooling space 23 the cooled cooling medium is transferred back to space 25, and it may thus initiate a new cooling circle.

Figure 4c discloses almost a similar construction, but using a radial fan 13, whereby the removal of the air from the stator space 9 closely adjacent to the end 6 occurs radially through an opening 12 to the chamber or space 23 between the shell 8 and the outer housing. Said space 23 includes a tube heat exchanger 24.

The medium conduits between the outer surface of the shell 8 and the housing 22 can be provided in various manners, such as by grooves provided on the outer surface of the shell, or by a clearance between the shell and the housing 22, by suitable bores etc. manner readily apparent to the skilled person.

Thus the invention provides an apparatus and a method by means of which a significant improvement is achieved to the prior art. For instance, by means of the invention it is possible to improve the cooling and/or ventilation characteristics of the machine. In addition, a power output from both ends of the machine is enabled without a risk for overheating problems. The number of different parts is also minimized, and the general construction of the assembly is simplified.

It is to be noted that the above examples are not intented to limit the scope of the invention, as defined by the appended claims. It is, of course, apparent to the skilled person that it is possible to use other fluids or mediums in the cooling as air, such as eg. cooling medium based on liquid or gas.

## Claims

1. An electric machine construction, comprising
a stator space (9) defined by a shell (8) and end portions (6) at both ends of the shell (8),
stator means and rotor means (20) having a first and end and a second end disposed within said stator space (9),
at least one cooling medium inlet opening (14, 34) for drawing cooling medium into the stator space (9),
cooling medium removal openings (12) for removing cooling medium from the stator space (9), and
means (13) for providing a suction for drawing cooling medium into the stator space (9) by rotating the rotor means (20) and for drawing cooling medium into the stator space (9) through said at least one cooling medium inlet opening (14, 34) and for removing cooling medium from the stator space (9) the cooling medium removal openings (12), **characterized**
**in that** said at least one cooling medium inlet opening (14, 34) is in the shell (8) and positioned intermediate the ends of the rotor means (20),
**in that** said cooling medium removal openings (12) are provided at the vicinity of both end portions (6) of the stator space (9),
**in that** the means (13) for providing a suction for drawing cooling medium into the stator space (9) by rotating the rotor means (20) for drawing cooling medium are fans (13) provided on the rotor means (20) at the vicinity of both end portions (6) of the stator space (9) for drawing cooling medium into said stator space (9) through said at least one inlet opening (14, 34) in the shell (8) and for removing cooling medium from said stator space (9) through the cooling medium removal openings (12) provided at the vicinity of both end portions (6) of the stator space (9).

2. An electric machine construction according to claim 1, **characterized in that** the conduction of the cooling medium into the stator space (9), circulation within the stator space and removal (12) from the stator space is arranged such that it occurs symmetrically relative to the electric machine construction (10).

3. An electric machine construction according to claim 1 or 2, **characterized in that** said end portions (6) are arranged further to form attachment means (5) of the electric machine construction for the attachment thereof to a mounting bed.

4. An electric machine construction according to any of the preceding claims, **characterized in that** the both ends of the electric machine construction (10) are provided with power output shafts (4).

5. An electric machine construction according to any of the preceding claims, **characterized in that** the apparatus (30) to be driven by the electric machine (10) is attached (32) directly to the end portion (6) of the electric machine construction, whereby the attachment means (5) integrated in the end portion (6) of the machine construction (10) form the means for attaching the integrated apparatus assembly to a bed.

6. An electric machine construction according to any of the preceding claims, **characterized in that** it is further provided with blower means so as to intensify the cooling medium flow.

7. An electric machine construction according to any of the preceding claims, **characterized in that** it further comprises heat exchanger means (24) provided within a space (23) between the outer surface of the shell (8) and the outer housing for cooling of the cooling medium flow, the construction being arranged to enable a closed circulation (25,14,9,12,23) of the cooling medium flow.

8. A method for cooling an electric machine construction comprising a stator space (9) defined by a shell (8) and end portions (6) at the either ends of the shell (8), wherein stator means and rotor means (20) of the electric machine are disposed within said stator space, comprising steps for
providing a suction inside the stator space (9) by rotating the rotor means (20) and means (13) for providing the suction,
drawing cooling medium by the suction into the stator space (9) through at least one cooling medium inlet opening (14, 34),
removing cooling medium from the stator space (9) through cooling medium removal openings (12), and
**characterized**
**by** providing the rotor means (20) with means (13) for providing the suction in the form of fans (13) at the vicinity of both end portions (6),
by providing said at least one cooling medium inlet opening (14, 34) in said shell (8) intermediate the ends of the rotor means (20),
by providing said cooling medium removal openings (12) at the vicinity of both ends portions (6) of the stator space (9)
by drawing the cooling medium into the stator space (9) through said at least one cooling medium inlet opening (14, 34) in said shell (8) intermediate the ends of the rotor means (20), and
by removing the cooling medium from the stator space (9) through said cooling medium removal openings (12) provided at the vicinity of both ends portions (6) of the stator space (9).

9. A method according to claim 8, **characterized in that** the suction aided conduction of the cooling medium into the stator space (9), circulation within the stator space and removal (12) from the stator space occurs symmetrically relative to the electric machine construction (10).

10. A method according to claim 8 or 9,
**characterized in that** it further includes mounting of an apparatus (30) to be driven by the electric machine (10) directly to the end portion (6) of the electric machine construction, and utilizing the attachment means (5) integrated in the end portion (6) of the machine construction (10) in attaching the integrated apparatus assembly to a bed.

11. A method according to any of claims 8 to 10,
**characterized in that** it further includes intensifying the cooling medium flow by blower means.

12. A method according to any of claims 8 to 11,
**characterized in that** it further includes cooling of the cooling medium flow by heat exchanger means (24) provided within a space (23) between the outer surface of the shell (8) and the outer housing so as to enable a closed circulation (25, 14, 9, 12, 23) of the cooling medium floor.

## Patentansprüche

1. Elektromaschinenkonstruktion, umfassend
einen Statorraum (9), der von einer Hülle (8) und Endabschnitten (6) an beiden Enden der Hülle (8) definiert ist,
Statormittel und Rotormittel (20) mit einem ersten Ende und einem zweiten Ende, die innerhalb des Statorraums (9) untergebracht sind,
zumindest eine Kühlmediumseinlassöffnung (14, 34) zum Saugen von Kühlmedium in den Statorraum (9),
Kühlmediumsentfernungsöffnungen (12) zum Entfernen von Kühlmedium aus dem Statorraum (9) und
Mittel (13) zum Schaffen eines Sogs zum Saugen von Kühlmedium in den Statorraum (9) durch Rotieren des Rotormittels (20) und zum Saugen von Kühlmedium in den Statorraum (9) durch die zumindest eine Kühlmediumseinlassöffnung (14, 34) und zum Entfernen von Kühlmedium aus dem Statorraum (9) durch die Kühlmediumsentfernungsöffnungen (12), **dadurch gekennzeichnet,**
**dass** die zumindest eine Kühlmediumseinlassöffnung (14, 34) in der Hülle (8) und zwischen den Enden des Rotormittels (20) positioniert ist,
**dass** die Kühlmediumsentfernungsöffnungen (12) in der Umgebung von beiden Endabschnitten (6) des Statorraums (9) vorgesehen sind,
**dass** die Mittel (13) zum Schaffen eines Sogs zum Saugen von Kühlmedium in den Statorraum (9) durch Rotieren des Rotormittels (20) zum Saugen von Kühlmedium Lüfter (13) sind, die an dem Rotormittel (20) in der Umgebung von beiden Endabschnitten (6) des Statorraums (9) vorhanden sind, um Kühlmedium in den Statorraum (9) durch die zumindest eine Einlassöffnung (14, 34) in der Hülle (8) zu saugen und um Kühlmedium aus dem Statorraum (9) durch die Kühlmediumsentfernungsöffnungen (12), die in der Umgebung von beiden Endabschnitten (6) des Statorraums (9) vorhanden sind, zu entfernen.

2. Elektromaschinenkonstruktion nach Anspruch 1, **dadurch gekennzeichnet, dass** die Leitung des Kühlmediums in den Statorraum (9), Zirkulation innerhalb des Statorraums und Entfernung (12) aus dem Statorraum so angeordnet ist, dass sie symmetrisch in Bezug auf die Elektromaschinenkonstruktion (10) erfolgt.

3. Elektromaschinenkonstruktion nach Anspruch 1 oder 2, **dadurch gekennzeichnet, dass** die Endabschnitte (6) ferner angeordnet sind, um Anbringungsmittel (5) der Elektromaschinenkonstruktion für das Anbringen davon an einem Montagebett zu bilden.

4. Elektromaschinenkonstruktion nach einem der vorstehenden Ansprüche, **dadurch gekennzeichnet, dass** die beiden Enden der Elektromaschinenkonstruktion (10) mit Leistungsausgangsschäften (4) versehen sind.

5. Elektromaschinenkonstruktion nach einem der vorstehenden Ansprüche, **dadurch gekennzeichnet, dass** der durch die Elektromaschine (10) anzutreibende Apparat (30) direkt an den Endabschnitten (6) der Elektromaschinenkonstruktion angebracht ist, wodurch die in die Endabschnitte (6) der Maschinenkonstruktion (10) integrierten Anbringungsmittel (5) die Mittel zum Anbringen der einstückigen Apparatanordnung an einem Bett bilden.

6. Elektromaschinenkonstruktion nach einem der vorstehenden Ansprüche, **dadurch gekennzeichnet, dass** sie ferner mit Gebläsemitteln versehen ist, um den Kühlmediumsfluss zu intensivieren.

7. Elektromaschinenkonstruktion nach einem der vorstehenden Ansprüche, **dadurch gekennzeichnet, dass** sie ferner Wärmetauschermittel (24) umfasst, die innerhalb eines Raums (23) zwischen der äußeren Oberfläche der Hülle (8) und dem äußeren Gehäuse zum Kühlen des Kühlmediumsflusses vorhanden sind, wobei die Konstruktion angeordnet ist, um eine geschlossene Zirkulation (23, 14, 9, 12, 23) des Kühlmediumsflusses zu ermöglichen.

8. Verfahren zum Kühlen einer Elektromaschinenkonstruktion, umfassend einen Statorraum (9), der durch eine Hülle (8) und Endabschnitte (6) an den jeweiligen Enden der Hülle (8) definiert ist, wobei Statormittel und Rotormittel (20) der Elektromaschine innerhalb des Statorraums untergebracht sind, umfassend Schritte zum
Schaffen eines Sogs innerhalb des Statorraums (9) durch Rotieren der Rotormittel (20) und Mittel (13) zum Schaffen des Sogs,
Saugen von Kühlmedium durch den Sog in den Statorraum (9) durch zumindest eine Kühlmediumseinlassöffnung (14, 34),
Entfernen von Kühlmedium aus dem Statorraum (9) durch Kühlmediumsentfernungsöffnungen (12) und
**gekennzeichnet**
**durch** Vorsehen der Rotormittel (20) mit Mitteln (13) zum Schaffen des Sogs in der Form von Lüftern (13) in der Umgebung von beiden Endabschnitten (6),
**durch** Vorsehen der zumindest einen Kühlmediumseinlassöffnung (14, 34) in der Hülle (8) zwischen den Enden der Rotormittel (20),
**durch** Vorsehen der Kühlmediumsentfernungsöffnungen (12) in der Umgebung von beiden Endabschnitten (6) des Statorraums (9),
**durch** Saugen des Kühlmediums in den Statorraum (9) durch die zumindest eine Kühlmediumseinlassöffnung (14, 34) in der Hülle (8) zwischen den Enden der Rotormittel (20) und
**durch** Entfernen des Kühlmediums aus dem Statorraum (9) durch die Kühlmediumsentfernungsöffnungen (12), die in der Umgebung von beiden Endabschnitten (6) des Statorraums (9) vorhanden sind.

9. Verfahren nach Anspruch 8, **dadurch gekennzeichnet, dass** die sogunterstützte Leitung des Kühlmediums in den Statorraum (9), Zirkulation innerhalb des Statorraums und Entfernung (12) aus dem Statorraum symmetrisch in Bezug auf die Elektromaschinenkonstruktion (10) erfolgt.

10. Verfahren nach Anspruch 8 oder 9, **dadurch gekennzeichnet, dass** es ferner ein Montieren eines durch die Elektromaschine (10) anzutreibenden Apparats (30) direkt an den Endabschnitt (6) der Elektromaschinenkonstruktion und ein Verwenden der in den Endabschnitt (6) der Maschinenkonstruktion (10) integrierten Anbringungsmittel (5) zum Anbringen der integrierten Apparatanordnung an einem Bett enthält.

11. Verfahren nach einem der Ansprüche 8 bis 10, **dadurch gekennzeichnet, dass** es ferner ein Intensivieren des Kühlmediumsflusses durch Gebläsemittel enthält.

12. Verfahren nach einem der Ansprüche 8 bis 11, **dadurch gekennzeichnet, dass** es ferner ein Kühlen des Kühlmediumsflusses durch Wärmetauschermittel (24) enthält, die innerhalb eines Raums (23) zwischen der äußeren Oberfläche der Hülle (8) und dem äußeren Gehäuse vorhanden sind, um eine geschlossene Zirkulation (25, 14, 9, 12, 23) des Kühlmediumsflusses zu ermöglichen.

## Revendications

1. Construction de machine électrique, comprenant
un espace de stator (9) défini par une coque (8) et des portions d'extrémité (6) aux deux extrémités de la coque (8), un moyen formant stator et un moyen formant rotor (20) ayant une première extrémité et une seconde extrémité disposées dans ledit espace de stator (9) ;
au moins une ouverture d'admission de milieu de refroidissement (14, 34) pour aspirer le milieu de refroidissement dans l'espace de stator (9),
des ouvertures de retrait de milieu de refroidissement (12) pour retirer le milieu de refroidissement de l'espace de stator (9), et
un moyen (13) pour réaliser une aspiration pour aspirer le milieu de refroidissement dans l'espace de stator (9) en faisant tourner le moyen formant rotor (20) et pour aspirer le milieu de refroidissement dans l'espace de stator (9) à travers au moins une ouverture d'admission de milieu de refroidissement (14, 34) et pour retirer le milieu de refroidissement de l'espace de stator (9) à travers les ouvertures de retrait de milieu de refroidissement (12),
**caractérisée**
**en ce qu'**au moins une ouverture d'admission de milieu de refroidissement précitée (14, 34) se trouve dans la coque (8) et est positionnée entre les extrémités du moyen formant rotor (20),
**en ce que** lesdites ouvertures de retrait de milieu de refroidissement (12) sont réalisées au voisinage des deux portions d'extrémité (6) de l'espace de stator (9),
**en ce que** les moyens (13) pour réaliser une aspiration pour aspirer le milieu de refroidissement dans l'espace de stator (9) en faisant tourner le moyen formant rotor (20) pour aspirer le milieu de refroidissement sont des ventilateurs (13) réalisés sur le moyen formant rotor (20) au voisinage des deux portions d'extrémité (6) de l'espace de stator (9) pour aspirer le milieu de refroidissement dans ledit espace de stator (9) à travers au moins une ouverture d'admission précitée (14, 34) dans la coque (8) et pour retirer le milieu de refroidissement dudit espace de stator (9) à travers les ouvertures de retrait de milieu de refroidissement (12) réalisées au voisinage des deux portions d'extrémité (6) de l'espace de stator (9).

2. Construction de machine électrique selon la revendication 1, **caractérisée en ce que** la condition du milieu de refroidissement dans l'espace de stator (9), la circulation dans l'espace de stator (9) et le retrait (12) de l'espace de stator est agencé de telle sorte qu'il a lieu d'une manière symétrique relativement à la construction de machine électrique (10).

3. Construction de machine électrique selon la revendication 1 ou 2, **caractérisée en ce que** lesdites portions d'extrémité (6) sont agencées en outre pour former un moyen de fixation (5) de la construction de machine électrique pour la fixation de celle-ci sur un bâti de montage.

4. Construction de machine électrique selon l'une des revendications précédentes, **caractérisée en ce que** les deux extrémités de la construction de machine électrique (10) sont munies d'arbres de sortie de puissance (4).

5. Construction de machine électrique selon l'une des revendications précédentes, **caractérisée en ce que** l'appareil (30) à entraîner par la machine électrique (10) est fixé (32) directement à la portion d'extrémité (6) de la construction de machine électrique, par quoi le moyen de fixation (5) intégré dans la portion d'extrémité (6) de la construction de machine (10) forme le moyen pour fixer l'ensemble de l'appareil intégré à un bâti.

6. Construction de machine électrique selon l'une des revendications précédentes, **caractérisée en ce qu'**elle présente en outre des moyens de soufflage de manière à intensifier l'écoulement du milieu de refroidissement.

7. Construction de machine électrique selon l'une des revendications précédentes, **caractérisée en ce qu'**elle comprend en outre un moyen formant échangeur de chaleur (24) réalisé dans un espace (23) entre la surface extérieure de la coque (8) et le boîtier extérieur pour le refroidissement de l'écoulement du milieu de refroidissement, la construction étant agencée pour permettre une circulation fermée (25, 14, 9, 12, 23) de l'écoulement du milieu de refroidissement.

8. Procédé de refroidissement d'une construction de machine électrique, comprenant un espace de stator (9) défini par une coque (8) et des portions d'extrémité (6) aux deux extrémités de la coque (8), où un moyen formant stator et un moyen formant rotor (20) de la machine électrique sont disposés dans ledit espace de stator, comprenant les étapes consistant à :
réaliser une aspiration à l'intérieur de l'espace de stator (9) en faisant tourner le moyen formant rotor (20) et le moyen (13) pour réaliser l'aspiration,
aspirer un milieu de refroidissement par aspiration dans l'espace de stator (9) à travers au moins une ouverture d'admission de milieu de refroidissement (14, 34),
retirer le milieu de refroidissement de l'espace de stator (9) à travers les ouvertures de retrait de milieu de refroidissement (12), et
**caractérisé**
**en** réalisant le moyen formant rotor (20) avec un moyen (13) pour exécuter l'aspiration sous la forme de ventilateurs (13) au voisinage des deux portions d'extrémité (6),
en réalisant au moins une ouverture d'admission de milieu de refroidissement précitée (14, 34) dans ladite coque (8) entre les extrémités du moyen formant rotor (20),
en réalisant lesdites ouvertures de retrait de milieu de refroidissement (12) au voisinage des deux portions d'extrémité (6) de l'espace de stator (9),
en aspirant le milieu de refroidissement dans l'espace de stator (9) à travers au moins une ouverture d'admission de milieu de refroidissement précitée (14, 34) dans ladite coque (8) entre les extrémités du moyen formant rotor (20), et
en retirant le milieu de refroidissement de l'espace de stator (9) à travers lesdites ouvertures de retrait de milieu de refroidissement (12) réalisées au voisinage des deux portions d'extrémité (6) de l'espace de stator (9).

9. Procédé selon la revendication 8, **caractérisé en ce que** la conduction soutenue par aspiration du milieu de refroidissement dans l'espace de stator (9), la circulation dans l'espace de stator et le retrait (12) de l'espace de stator a lieu d'une manière symétrique relativement à la construction de machine électrique (10).

10. Procédé selon la revendication 8 ou 9, **caractérisé en ce qu'**il comprend en outre le montage d'un appareil (30) destiné à être entraîné par la machine électrique (10) directement sur la portion d'extrémité (6) de la construction de machine électrique, et l'utilisation du moyen de fixation (5) intégré dans la portion d'extrémité (6) de la construction de machine (10) en fixant l'ensemble de l'appareil intégré sur un bâti.

11. Procédé selon l'une des revendications 8 à 10, **caractérisé en ce qu'**il comprend en outre l'intensification de l'écoulement du milieu de refroidissement par un moyen de soufflage.

12. Procédé selon l'une des revendications 8 à 11, **caractérisé en ce qu'**il comprend en outre le refroidissement de l'écoulement du milieu de refroidissement par un moyen formant échangeur de chaleur (24) réalisé dans un espace (23) entre la surface extérieure de la coque (8) et le boîtier extérieur de manière à permettre une circulation fermée (25, 14, 9, 12, 23) de l'écoulement du milieu de refroidissement.
